# EUROPÄISCHE PATENTSCHRIFT

(11) **EP 0 936 193 B1**
(45) Veröffentlichungstag und Bekanntmachung des Hinweises auf die Patenterteilung: **29.09.2004**
(21) Anmeldenummer: 99102562.8
(22) Anmeldetag: 11.02.1999
(51) Int. Cl.: C03B 27/00, C03B 27/012

(54) **Glas- und Glaskeramikplatten mit erhöhter thermischer Beständigkeit sowie Verfahren zu ihrer Herstellung**
Glass and glass-ceramic plates with increased thermal resistance and method for making the same
Plaques en verre et en vitro-céramique à résistance thermique améliorée et procédé de leur fabrication

(30) Priorität: 13.02.1998 DE 19805907
(43) Veröffentlichungstag der Anmeldung: 18.08.1999
(73) Patentinhaber: Schott Glas, 55122 Mainz (DE)
(72) Erfinder: Nass, Peter, Dr., 55120 Mainz (DE); Dudek, Roland, 55545 Bad Kreuznach (DE); Naubik, Jürgen, 67575 Eich (DE)
(74) Vertreter: Luderschmidt, Schüler & Partner GbR

(56) Entgegenhaltungen:
- US-A- 3 081 209
- US-A- 3 119 680
- US-A- 4 178 082

## Beschreibung

Bei ungleichmäßiger Beheizung über die Fläche von ebenen oder gebogenen Glas- oder Glaskeramikplatten entstehen mechanische Spannungen in Form von Druck- oder Zugspannungen. Die Höhe dieser Spannungen hängt ab von der Temperaturverteilung auf der Platte und von physikalischen Materialeigenschaften, wie z.B. dem thermischen Ausdehnungskoeffizienten, dem Elastizitätsmodul, der Wärmeleitfähigkeit u. dergl. Übersteigen die Zug- oder Druckspannungen die durch die Festigkeit der Platte festgelegten höchstzulässigen Grenzen, kommt es zum Bruch der Platte.

Derartige Platten aus Glas- oder Glaskeramik mit ungleichmäßig beheizten Bereichen kommen z.B. als Herdkochflächen (Elektro-, Gas-, Induktions- und Festbrennstoffherde), Grillflächen, Lampenabdeckungen, Abdeckungen von Heizkörpern usw. zur Anwendung.

Prinzipiell können die Glas- oder Glaskeramikplatten einen positiven oder negativen thermischen Ausdehnungskoeffizienten aufweisen. Ist der thermische Ausdehnungskoeffizient im relevanten Temperaturbereich negativ, was seltener der Fall sein dürfte, dann treten in den Flächenbereichen der Platte, wo diese aufgeheizt wird, Zugspannungen auf. Im umgekehrten Fall, bei häufiger auftretendem positiven thermischen Ausdehnungskoeffizi-enten, tritt die Zugspannung in den an die aufgeheizten Bereiche angrenzenden kälteren Randbereichen auf, wodurch diese bruchgefährdet sind. Darüber hinaus weist, bedingt durch die maschinelle Bearbeitung der Kante, der Randbereich einer Platte ohnedies eine geringere Festigkeit auf. Die Bruchgefährdung durch die auftretenden Zugspannungen, insbesondere in den minder festen Randbereichen hat zur Folge, daß bestimmte Materialien von einigen der oben angeführten Anwendungsmöglichkeiten ausgeschlossen oder nur für einen relativ eng begrenzten Temperaturbereich einsetzbar sind.

Zur Überwindung dieser Nachteile wurde im bisherigen Stand der Technik das Glas bzw. die Glaskeramik einer Härtung (Vorspannen) unterzogen, wobei in der Oberflächenschicht des Glaserzeugnisses eine Druckspannung und im Innern eine Zugspannung erzeugt werden. Die Druckspannungen auf der Oberfläche der Gläser erhöhen dabei deren Festigkeit, weil dann bei Zugbelastung diese Druckspannungen auf der Oberfläche erst überwunden werden müssen, bevor es schließlich infolge Ausbildung vom Zugspannungsspitzen zum Bruch kommen kann.

Zum Härten (Vorspannen) der Glasartikel standen im wesentlichen zwei Verfahren zur Verfügung: die thermische Härtung und die chemische Härtung.

Bei der thermischen Härtung werden Gläser bis knapp unter ihren Erweichungspunkt erhitzt und danach schnell abgeschreckt. Durch das langsamere Abkühlen des Glasinnern im Vergleich zur Oberfläche wird diese unter Druckspannung gesetzt, während das Innere unter Zugspannung gerät. Da die auftretenden Effekte umso größer sind, je größer die thermische Ausdehnung des Glases ist, ist dieses Verfahren auf Materialien mit hinreichend großen Ausdehnungskoeffizienten beschränkt. Ein weiterer Nachteil besteht darin, daß die erzielten Verfestigungen schnell aufgehoben werden, wenn das Glas auf Temperaturen seines Transformationsbereichs gebracht wird, so daß das Verfahren auf Objekte nicht anwendbar ist, die im Anwendungsfall Temperaturen oberhalb der Relaxationstemperatur des thermisch gehärteten (vorgespannten) Glases ausgesetzt sind. Darüber hinaus ist die thermische Härtung bei dünnwandigen Objekten wenig effizient.

Die chemische Härtung beruht darauf, daß eine Druckvorspannung in der Glasoberfläche durch Änderung ihrer chemischen Zusammensetzung gegenüber dem Glasinnern erreicht wird, wobei Oberflächenschichten mit im Vergleich zum Glasinnern niedrigeren themischen Ausdehnungskoeffizienten oder größerem Volumen erzeugt werden. Die Methode der chemischen Härtung besteht aus einem Ionenaustausch. Sie hat jedoch den Nachteil, daß sie ein verhälnismäßig zeit- und kostenaufwendiges Verfahren darstellt, weil innerhalb wirtschaftlich vertretbarer Zeiten zu dünne, unter Druckspannung stehende Schichten erzeugt werden. Darüber hinaus erfährt die Methode eine Einschränkung, weil sie nur auf Gläser bestimmter chemischer Zusammensetzung anwendbar ist. Ein weiterer Nachteil besteht darin, daß die Druckspannungsschicht eines chemisch gehärteten Glases typischerweise nur eine Dicke von 100 bis 200 µm aufweist, so daß das Verfahren auf Anwendungen eingeschränkt ist, bei denen grobe Oberflächenverletzungen ausgeschlossen werden können. Andernfalls würde eine mechanische Verletzung die Druckspannungsschicht durchdringen, was die Schutzwirkung aufheben würde.

Der Erfindung lag die Aufgabe zugrunde, ein Verfahren zur Herstellung von Glas- und Glaskeramikplatten zur Verfügung zu stellen, welches auch auf Artikel ohne die obigen Beschränkungen anwendbar ist und mit welchem derartigen Platten die Eigenschaft vermittelt wird, daß sie bei ungleichmäßiger Beheizung trotz auftretender Zugspannungen ohne Bruchgefahr wesentlich höheren Temperaturen ausgesetzt werden können.

Verfahrensmäßig wird die Aufgabe dadurch gelöst, daß die Glas- oder Glaskeramikplatten nach Abschreckung einem Zonentempern mit einem definierten Temperatur-Zeit-Programm unterworfen werden, wobei die Platten flächenmäßig in zwei Zonen aufgeteilt sind, in welchen bei jeweils unterschiedlicher Temperatur getempert wird und die Zonen mit der höheren Temperatur beim Tempern den Teilbereichen der fertigen Glas- oder Glaskeramikplatten entsprechen, in welchen sich nach ungleichmäßiger Beheizung entsprechend der jeweiligen spezifischen Anwendung der Glas- oder Glaskeramikplatten Druckspannungen aufbauen und wobei die bei der höheren Temperatur getemperte Zone auf eine Temperatur unter der beim Abschrecken maximal erreichten Temperatur aufgeheizt wird. Die mit diesem Verfahren erhaltenen Glas- oder Glaskeramikplatten sind dadurch gekennzeichnet, daß sie in zwei Teilbereiche unterteilt sind, wobei der eine Teilbereich eine strukturelle Verdichtung und der andere Teilbereich eine Druckspannung aufweist.

Unter Tempern wird hierbei, wie in dem betreffenden Fachgebiet üblich, die nach einem definierten Temperatur-Zeit-Programm in einem kontinuierlich oder periodisch arbeitenden Ofen erfolgende nachträgliche Wärmebehandlung eines Glaserzeugnisses (Glas- oder Glaskeramikplatte) mit dem Ziel der Modifizierung der Werkstoff- und/oder Erzeugnisparameter verstanden.

Die strukturelle Verdichtung wird bei dem bei höherer Temperatur erfolgenden Tempern der Teilbereiche der Glas- oder Glaskeramikplatten erzielt, was dazu führt, daß sich in den angrenzenden bei niedrigerer Temperatur getemperten Bereichen eine Druckspannung aufbaut und das erhaltene strukturelle Ungleichgewicht dauernd in den dann fertigen Glas- oder Glaskeramikplatten aufrechterhalten bleibt. Wird dann der für die Beheizung vorgesehene Bereich bei der Anwendung auf Anwendungstemperatur erhitzt, dann werden z.B. bei einem Material mit positiver Wärmedehnung die im nicht beheizten Bereich auftretenden thermisch (und/oder mechanisch) erzeugten Zugspannungen durch die dort "eingefrorenen Druckspannungen" ganz oder teilweise kompensiert, so daß dort keine zu einem Bruch führenden Zugspannungsspitzen mehr auftreten können.

Die einzigen Anforderungen an das für die Glas- oder Glaskeramikplatte verwendete Material bestehen darin, daß es zum einen "kompaktionsfähig" sein muß, d.h. es muß sich durch einen Abschreckvorgang die während des Beginns des Abschreckvorgangs materialspezifisch vorliegende zunächst großvolumige Glasstruktur "einfrieren" lassen, die sich dann bei einem späteren Tempern resp. Zonentempern weiter verdichtet ("kompaktiert"), zum andern muß beim Temperprozeß eine (materialabhängige) maximale Temperatur erreicht werden können, die über der späteren Anwendungstemperatur liegt.

Vor dem eigentlichen Zonentempern muß die Glas- oder Glaskeramikplatte zunächst abgeschreckt werden, sofern sie dies nicht bereits ist. Zum Abschrecken wird die betreffende Platte auf eine Temperatur größer oder gleich der Transformationstemperatur T_{g} ihres Materials gebracht und sodann schnell auf eine Temperatur unterhalb T_{g} abgekühlt. Je größer die Abkühlgeschwindigkeit (Temperaturerniedrigung pro Zeit), umso besser ist das Ergebnis.

Beim eigentlichen Zonentempern werden die bei der höheren Temperatur zu tempernden Zonen auf eine Temperatur aufgeheizt, die unter der Temperatur liegen muß, welche beim Abschrecken maximal erreicht wurde. Je größer das Flächenverhältnis der bei der höheren Temperatur zu tempernden Zonen zur Gesamtfläche der Platte ist, umso größer wird die sich in den bei der niedrigeren Temperatur zu tempernden Zonen aufbauende Druckspannung (bei positiver Wärmedehnung). Die bei höherer Temperatur zu tempernde Zone, die eine strukturelle Verdichtung erfährt, kann eine einzige zusammenhängende Zone sein oder, wie z.B. bei einer Herdplatte mit mehreren Kochflächen, aus mehreren über die Fläche der Platte verteilten nicht zusammenhängenden Teilzonen bestehen. Die Größe der erzielbaren Druckspannung wächst mit der Temperzeit (Haltezeit), d.h. die Zeit, über welche die beiden Zonen ihrer jeweils unterschiedlichen Temperatur zum Tempern ausgesetzt werden. Aus Rentabilitätsgründen ist hier ein Kompromiß zu finden. Vernünftige Temperzeiten mit technisch zufriedenstellenden Ergebnissen dürften im Bereich von 30 bis 120 Stunden liegen.

Technisch läßt sich das Zonentempern so realisieren, daß z.B. die gesamte Platte horizontal liegend in einen homogen beheizten Ofen eingebracht wird, wobei die Heiztemperatur des Ofens der Temperatur der bei niedrigere Temperatur zu tempernden, der Erzeugung von Druckspannung dienenden Zonen entspricht. Die Realisierung der bei der höheren Temperatur zu tempernden Zonen wird dadurch erreicht, daß entsprechend der Lage dieser Zonen plattenober- und/oder -unterseitig angebrachte, separat regelbare Heizelemente die dem Tempern bei der höheren Temperatur entsprechende Hitze liefern.

Die Erfindung wird nun anhand der folgenden Beispiele näher erläutert. Prinzipiell sind die einzustellenden Temperaturen innerhalb der oben angegebenen Grenzen variabel.

### Beispiel 1:

Eine 4 mm dicke ebene Glaskeramikplatte (SCHOTT-Code 85768) mit einem thermischen Ausdehnungskoeffizienten von ca. 1 x 10⁻⁶/K wird einem spezifischen Zonentempern unterzogen.

Die Glaskeramikplatte wird zunächst abgeschreckt, indem sie zunächst auf eine Temperatur von 830°C erwärmt und sodann mit einer Abkühlgeschwindigkeit von mindestens 100 K/min auf unter 600°C heruntergekühlt wird. (Der Abschreckprozess entfällt, wenn die Platte aus einem konventionellen Herstellungsverfahren bereits in abgeschreckten Zustand vorliegt).

Da bei der fertigen Glaskeramikplatte der mittlere Bereich als Heizzone dienen soll, wird das Zonentempern so durchgeführt, daß dieser Teil auf 750°C aufgeheizt wird, während der diesen Bereich umgebende äußere Randbereich nur auf 600°C aufgeheizt wird. Die Temperdauer beträgt 90 Stunden. Das Verhältnis von innerer "Heizzone" zur gesamten Plattenfläche ist 0,4.

Nach Abschluß des Temperprozesses liegen im Randbereich der Platte Druckspannungen in Höhe von ca. 15 MPa vor. Wird diese Platte nun als Kochfläche mit dem inneren Bereich als Heizzone eingesetzt, so werden beim Aufheizen die dann im Randbereich hervorgerufenen Zugspannungen um eben den Betrag der "eingefrorenen" Druckspannung reduziert. Daher lassen sich die einem Zonentempern unterworfenen Glaskeramikplatten in der Heizzone auf wesentlich höhere Temperaturen aufheizen als dies für nicht getemperte Glaskeramikplatten möglich ist. Die zulässige Höchsttemperatur für die getemperte Platte lag bei 508°C, die für die nicht getemperte Glaseramikplatte jedoch nur bei 373 °C.

### Beispiel 2:

Eine 2 mm dicke ebene Glasplatte (SCHOTT Borosilikatglas 3.3 "Borofloat 33") mit einem thermischen Ausdehnungskoeffizienten von ca. 3,3 x 10⁻⁶/K wird einem spezifischen Zonentempern unterzogen.

Die Glasplatte wird zunächst abgeschreckt, indem sie zuerst auf eine Temperatur von 700°C erwärmt und sodann mit einer Abkühlgeschwindigkeit von mindestens 100 K/min auf unter 400°C heruntergekühlt wird.

Die fertige Glasplatte soll als Abdeckscheibe für Beheizungen dienen, wo sie im mittleren Bereich stark aufgeheizt wird. Daher wird das Zonentempern wieder so durchgeführt, daß dieser Teil wegen der positiven thermischen Dehnung auf 550°C aufgeheizt wird, während der diesen Bereich umgebende äußere Randbereich nur auf 450°C aufgeheizt wird. Die Temperdauer beträgt 50 Stunden. Das Verhältnis von innerer "Heizzone" zur gesamten Plattenfläche ist 0,4.

Nach Abschluß des Temperprozesses liegt im Randbereich der Platte eine Druckspannung in Höhe von ca. 13 MPa vor, welche wieder der im Außenbereich beim bestimmungsgemäßen Einsatz der Glasplatte hervorgerufenen Zugspannung entgegenwirken. Die zulässige Höchsttemperatur für die getemperte Platte lag bei 146°C, die für die nicht getemperte Glasplatte jedoch nur bei 93°C.

## Patentansprüche

1. Verfahren zur Herstellung von Glas- oder Glaskeramikplatten mit hoher Beständigkeit gegenüber Brüchen infolge ungleichmäßiger Beheizung, **dadurch gekennzeichnet, daß** nach herkömmlichen Verfahren hergestellte Glas- oder Glaskeramikplatten nach dem Abschrecken einem Zonentempern unterzogen werden, wobei eine Platte in zwei Temperzonen unterteilt wird, welche jeweils einer unterschiedlichen Temperatur ausgesetzt werden und wobei diejenige Zone mit der jeweils höheren Temperatur beaufschlagt wird, die bei der fertigen Platte dem Bereich entspricht, wo sich während der ungleichmäßigen Beheizung dann entsprechend ihrer jeweiligen spezifischen Anwendung eine Druckspannung ausbildet, und wobei die bei der höheren Temperatur getemperte Zone auf eine Temperatur unter der beim Abschrecken maximal erreichten Temperatur aufgeheizt wird.

2. Verfahren nach Anspruch 1, **dadurch gekennzeichnet, daß** bei einer Platte aus einem Material mit positiver thermischer Dehnung diejenige Zone mit der jeweils höheren Temperatur beaufschlagt wird, die bei der fertigen Platte dem Bereich entspricht, der dann entsprechend ihrer jeweiligen spezifischen Anwendung eine höhere Aufheizung erfährt.

3. Verfahren nach den Ansprüchen 1 und 2, **dadurch gekennzeichnet, daß** die zu tempernde Platte in einen homogen beheizten Ofen eingebracht wird, dessen Temperatur der Temperatur entspricht, die für die bei niedriger Temperatur zu tempernden Zonen vorgesehen ist und die zusätzliche Temperatur für die bei der höheren Temperatur zu tempernden Zonen über plattenober- und/oder -unterseitig der betreffenden Zonen angebrachte separat regelbare Heizelemente geliefert wird.

4. Verfahren nach den Ansprüchen 1 und 2, **dadurch gekennzeichnet, daß** die zu tempernde Platte in einen homogen beheizten Ofen eingebracht wird, dessen Temperatur der Temperatur entspricht, die für die bei höherer Temperatur zu tempernden Zonen vorgesehen ist, und die niedrigere Temperatur für die bei der niedrigeren Temperatur zu tempernden Zonen durch plattenober- und/oder unterseitig der betreffenden Zonen angebrachte Kühlelemente geliefert wird.

5. Verfahren nach den Ansprüchen 1 bis 4, **dadurch gekennzeichnet, daß** diejenige Temperzone, die bei der fertigen Platte den Teilbereichen entspricht, die dann entsprechend ihrer jeweiligen spezifischen Anwendung eine höhere Aufheizung erfahren in zwei oder mehrere über die Fläche der Platte verteilte nicht zusammenhängende Teilzonen unterteilt ist.

6. Glas- oder Glaskeramikplatte mit hoher Beständigkeit gegenüber Brüchen infolge ungleichmäßiger Beheizung, hergestellt nach dem Verfahren gemäß einem der Ansprüche 1 bis 5, **dadurch gekennzeichnet, daß** sie in zwei Teilbereiche unterteilt ist, wobei der eine Teilbereich eine strukturelle Verdichtung und der andere Teilbereich eine Druckspannung aufweist.

7. Glas- oder Glaskeramikplatte nach Anspruch 6, **dadurch gekennzeichnet, daß** sie aus einem Material mit positiver thermischer Dehnung besteht, wobei der Teilbereich mit struktureller Verdichtung der den höheren Temperaturen auszusetzende Bereich und der Teilbereich mit Druckspannung der den niedrigeren Temperaturen auszusetzende Bereich ist.

8. Glas- oder Glaskeramikplatte nach Anspruch 6, **dadurch gekennzeichnet, daß** sie aus einem Material mit negativer thermischer Dehnung besteht, wobei der Teilbereich mit struktureller Verdichtung der den niedrigeren Temperaturen auszusetzende Bereich und der Teilbereich mit Druckspannung der den höheren Temperaturen auszusetzende Bereich ist.

9. Glaskeramikplatte nach Anspruch 7, **dadurch gekennzeichnet, daß** sie eine Herdkochfläche ist und der Teilbereich mit struktureller Verdichtung ein oder mehrere Heizflächen darstellt.

## Claims

1. A process for the production of glass and glass-ceramic plates with a high resistance to breakages due to non-uniform heating, **characterised in that** glass or glass-ceramic plates produced by conventional processes are subjected after quenching to zone toughening, whereby a plate is divided into two toughening zones which are each subjected to a different temperature, and whereby the zone exposed to the higher temperature is the one that corresponds in the finished plate to the area where a compressive stress is then created during the non-uniform heating according to its given specific application, and whereby the zone toughened at the higher temperature is heated to a temperature below the maximum temperature reached during quenching.

2. The process according to claim 1, **characterised in that**, in a plate made from a material with positive thermal expansion, the zone exposed to the higher temperature is the one that corresponds in the finished plate to the area which then experiences, according to its given specific application, a higher degree of heating.

3. The process according to claims 1 and 2, **characterised in that** the plate to be toughened is introduced into a homogeneously heated furnace, whose temperature corresponds to the temperature provided for the zones to be toughened at lower temperature, and the additional temperature for the zones to be toughened at the higher temperature is provided via separately regulatable heating elements fitted above and/or below the plate in the zones concerned.

4. The process according to claims 1 and 2, **characterised in that** the plate to be toughened is introduced into a homogeneously heated furnace, whose temperature corresponds to the temperature provided for the zones to be toughened at higher temperature, and the lower temperature for the zones to be toughened at the lower temperature is provided via cooling elements fitted above and/or below the plate in the zones concerned.

5. The process according to claims 1 to 4, **characterised in that** the toughening zone which corresponds in the finished plate to the partial areas that then experience, according to their given specific application, a higher degree of heating, is divided into two or more unconnected partial zones distributed over the area of the plate.

6. A glass or glass-ceramic plate with high resistance to breakages due to non-uniform heating, produced by the process according to any one of claims 1 to 5, **characterised in that** it is divided into two partial areas, whereby one partial area has a structural compression and the other partial area has a compressive stress.

7. The glass or glass-ceramic plate according to claim 6, **characterised in that** it is made from a material with positive thermal expansion, whereby the partial area with structural compression is the area to be subjected to the higher temperatures and the partial area with compressive stress is the area to be subjected to the lower temperatures.

8. The glass or glass-ceramic plate according to claim 6, **characterised in that** it is made from a material with negative thermal expansion, whereby the partial area with structural compression is the area to be subjected to the lower temperatures and the partial area with compressive stress is the area to be subjected to the higher temperatures.

9. The glass-ceramic plate according to claim 7, **characterised in that** it is a stove cooking area and the partial area with structural compression represents one or more heating areas.

## Revendications

1. Procédé pour la préparation de plaques en verre ou en vitrocéramique avec une résistance élevée aux cassures résultant d'un chauffage non uniforme, **caractérisé en ce que** des plaques en verre ou en vitrocéramique préparées selon des procédés classiques sont soumises après la trempe à un tempérage en zones, une plaque étant divisée en deux zones de tempérage, lesquelles sont à chaque fois exposées à une température différente et la zone qui est soumise à la température à chaque fois plus élevée correspondant pour la plaque achevée au domaine, dans lequel se forme pendant le chauffage non uniforme alors selon son application spécifique du moment une contrainte de compression, et la zone tempérée à la température plus élevée étant chauffée à une température inférieure à la température maximale atteinte lors de la trempe.

2. Procédé selon la revendication 1, **caractérisé en ce que** pour une plaque constituée d'une matière présentant une dilatation thermique positive, la zone qui est exposée à la température à chaque fois plus élevée correspond pour la plaque achevée au domaine, qui est alors selon son application spécifique du moment, soumis à un chauffage plus important.

3. Procédé selon les revendications 1 et 2, **caractérisé en ce que** la plaque à tempérer est introduite dans un four chauffé de manière homogène dont la température correspond à la température qui est prévue pour les zones à tempérer à une température plus faible et la température supplémentaire pour les zones à tempérer à la température plus élevée est fournie par l'intermédiaire d'éléments de chauffage pouvant être réglés de manière séparée, appliqués sur le côté de plaque supérieur et/ou inférieur des zones concernées.

4. Procédé selon les revendications 1 et 2, **caractérisé en ce que** la plaque à tempérer est introduite dans un four chauffé de manière homogène dont la température correspond à la température qui est prévue pour les zones à tempérer à une température plus élevée, et la température plus faible pour les zones à tempérer à la température plus faible est fournie par l'intermédiaire d'éléments de refroidissement appliqués sur le côté de plaque supérieur et/ou inférieur des zones concernées.

5. Procédé selon les revendications 1 à 4, **caractérisé en ce que** la zone de tempérage, qui correspond pour la plaque achevée aux domaines partiels qui sont alors, selon son application spécifique du moment, soumis à un chauffage plus important, est divisée en deux ou plusieurs zones partielles non liées, réparties sur la surface de la plaque.

6. Plaque en verre ou en vitrocéramique avec une résistance élevée aux cassures résultant d'un chauffage non uniforme, préparée selon le procédé selon l'une des revendications 1 à 5, **caractérisée en ce qu'**elle est divisée en deux domaines partiels, un domaine partiel présentant une densification structurelle et l'autre domaine partiel une contrainte de compression.

7. Plaque en verre ou en vitrocéramique selon la revendication 6, **caractérisée en ce qu'**elle est constituée d'une matière présentant une dilatation thermique positive, le domaine partiel avec une densification structurelle étant le domaine à exposer aux températures plus élevées et le domaine partiel avec une contrainte de compression étant le domaine à exposer aux températures plus faibles.

8. Plaque en verre ou en vitrocéramique selon la revendication 6, **caractérisée en ce qu'**elle est constituée d'une matière présentant une dilatation thermique négative, le domaine partiel avec une densification structurelle étant le domaine à exposer aux températures plus faibles et le domaine partiel avec une contrainte de compression étant le domaine à exposer aux température plus élevées.

9. Plaque en vitrocéramique selon la revendication 7, **caractérisée en ce qu'**elle est une surface de cuisson pour cuisinière et que le domaine partiel avec une densification structurelle constitue une ou plusieurs surfaces de cuisson.
